# EUROPÄISCHE PATENTSCHRIFT

(11) **EP 2 390 238 B1**
(45) Veröffentlichungstag und Bekanntmachung des Hinweises auf die Patenterteilung: **14.02.2018**
(21) Anmeldenummer: 11164441.5
(22) Anmeldetag: 02.05.2011
(51) Int. Cl.: C03B 19/02

(54) **Verfahren und Vorrichtung zur Herstellung von Glasformteilen durch Spritzgießen**
Method and apparatus for producing glass parts by injection molding
Procédé et dispositif de fabrication de pièces en verre par moulage par injection

(30) Priorität: 25.05.2010 DE 102010017071
(43) Veröffentlichungstag der Anmeldung: 30.11.2011
(73) Patentinhaber: glaskoch B. Koch jr. GmbH + Co. KG, 33014 Bad Driburg (DE)
(72) Erfinder: Märkert, Jürgen, 56203 Höhr-Grenzhausen (DE)
(74) Vertreter: REHBERG HÜPPE + PARTNER

(56) Entgegenhaltungen:
- DE-A1- 19 742 159
- JP-A- H06 279 040
- US-A- 3 814 593

## Beschreibung

### TECHNISCHES GEBIET DER ERFINDUNG

Die Erfindung betrifft ein Verfahren zur Herstellung von Glasformteilen durch Spritzgießen.

Bei den Glasformteilen kann es sich um beliebige Körper aus Glas handeln, wobei es insbesondere um innovative dekorative Glasformteile aus den Bereichen Wohnungseinrichtung, Schmuck, Geschenkartikel, Büroartikel, Automobiltechnik, Optik, Elektrotechnik und Computerperipheriegeräte mit einer vergleichsweise komplexen Geometrie geht, z. B. Gehäuse.

### STAND DER TECHNIK

Ein Verfahren und eine Vorrichtung zur Herstellung von Glasformteilen durch Spritzgießen sind aus der deutschen Patentanmeldung DE 33 06 253 A1 bekannt. Die Glasschmelze wird mit einer Temperatur von etwa 1.250 °C in einen Gießzylinder eingebracht. Der Gießzylinder weist Formhälften auf, die z. B. bei einem Kalknatronglas auf 500 °C vorgewärmt werden. Als Fördereinrichtung zum Fördern der Glasschmelze aus dem Gießzylinder durch einen Düsenkanal in die Form mittels Druckbeaufschlagung ist eine Kolben/Zylindereinheit mit einem Presskolben vorgesehen. Bei der Betätigung des Presskolbens wird die Glasschmelze mit einem Druck von zwischen 50 und 1.000 bar, bevorzugt zwischen 250 und 750 bar, in die Form eingepresst. Während der allmählichen Verfestigung des Kerns der Glasschmelze in der Form wird ein Nachdruck aufgebracht, der eine Absenkung des Gießdrucks darstellt und bis auf 25 bis 0 % des Gießdrucks abfällt. Sobald die Glasmasse in der Form weitestgehend verfestigt ist, wird diese vollständig druckentlastet und kann in der Form druckfrei vollständig erstarren. Anschließend wird das Glasformteil aus der Form entnommen, der Gießrest abgetrennt und das Glasformteil in einem Kühlofen bis auf etwa 100 °C abgekühlt.

Nach Erkenntnissen der Anmelderin der hier vorliegenden Patentanmeldung sind die gemäß dem Spritzgießverfahren dieses Stands der Technik hergestellten Glasformteile aufgrund von Dichteunterschieden im Glas mit den daraus resultierenden Spannungen sehr spröde und weisen keine ausreichende mechanische Festigkeit sowie Temperaturwechselbeständigkeit auf. Als nachteilig wird auch die Verwendung eines Kolbens zum Fördern der Glasschmelze aus dem Gießzylinder in die Form empfunden, da sich hierdurch mit der Vorrichtung ohne Weiteres nur identische Produkte fertigen lassen. Es kommt auch leicht zur Unterfüllung der Form infolge nicht konstanter Temperaturen der Schmelze und/oder der Form.

Aus dem US-Patent US 3,814,593 ist ein Verfahren und eine Vorrichtung zur Herstellung von Glasformteilen durch Spitzgießen bekannt. Die Glasschmelze wird dabei gemäß einem Beispiel auf eine Temperatur von 1.471 °C erwärmt und in eine Form gefördert, die eine Temperatur von 482 °C besitzt. Die Förderung erfolgt dabei mit einem Druck von 1,25 bar. Innerhalb von 90 s erreicht die Glasschmelze dann eine Temperatur von etwa 610 °C in der Form. Anschließend wird die Form langsam heruntergekühlt, wobei die Temperatur um etwa 16 °C pro Stunde absinkt. Dann wird das Glasformteil aus der Form entnommen.

### AUFGABE DER ERFINDUNG

Der Erfindung liegt die Aufgabe zugrunde, ein Verfahren und eine Vorrichtung zur kostengünstigen Herstellung von Glasformteilen durch Spritzgießen bereitzustellen, bei denen die hergestellten Glasformteile - und insbesondere innovative dekorative Glasformteile z. B. aus den Bereichen Wohnungseinrichtung und Schmuck - wirtschaftlich hergestellt werden können und diese gleichzeitig eine erhöhte mechanische Festigkeit, Temperaturwechselbeständigkeit und Oberflächengüte aufweisen.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### WEITERER STAND DER TECHNIK

Aus dem US-Patent US 5,904,746 sowie der zugehörigen deutschen Patentanmeldung DE 197 42 159 A1 sind ein Verfahren und eine Vorrichtung zur Herstellung von optischen Glasformteilen, wie insbesondere optischen Linsen, durch Druckguss bzw. Spritzgießen bekannt. Die Glasschmelze wird in dem Gießzylinder selbst hergestellt, indem dort ein Glasstab aufgeschmolzen wird. Auf den nicht aufgeschmolzenen Teil des Glasstabs wirkt dann ein Kolben ein, so dass der Glasstab und die in seinem dem Kolben abgewandten Endbereich vorhandene Glasschmelze in Richtung der Einspritzdüse und der Form druckmäßig beaufschlagt werden. Anders gesagt wird also der aufgeschmolzene Teil des Glasstabs in die Form eingespritzt. Die Glasschmelze kann beim ersten Schritt des Einspritzens der Glasschmelze in die Form eine Temperatur besitzen, die im Bereich der Temperatur am Arbeitspunkt der Glasschmelze liegt, so dass die Glasschmelze eine Viskosität von zwischen 10² bis 10⁵ Poise, d. h. zwischen 10 und 10⁴ Pascalsekunden (Pa·s), und vorzugsweise von zwischen 10² bis 10³ Poise, d. h. zwischen 10 und 100 Pa·s, besitzt. Nach dem Schritt des Spritzgießens erfolgt zwingend der weitere Schritt des Pressens des in der Form befindlichen Glaswerkstoffs, wobei dieser in der Pressstufe eine Viskosität von zwischen 10¹⁰ und 10¹² Poise, d. h. zwischen 10⁹ und 10¹¹ Pa·s, besitzen soll.

### BESCHREIBUNG DER ERFINDUNG

Die Erfindung betrifft ein Verfahren zur Herstellung von Glasformteilen durch Spritzgießen. Eine Glasschmelze wird außerhalb eines Gießzylinders bereitgestellt, insbesondere in einer Schmelzwanne, einem Schmelztiegel oder einem Glashafen. Die Glasschmelze wird dann in den Gießzylinder überführt. Die Glasschmelze wird in dem Gießzylinder beheizt. Die Glasschmelze wird mittels Druckbeaufschlagung über einen Düsenkanal in eine Form gefördert. Die Glasschmelze wird zur Förderung in die Form mit einem niedrigen Druck von maximal 10 bar beaufschlagt. Die Glasschmelze wird so beheizt, dass sie beim Verlassen des Düsenkanals mindestens die Temperatur am Arbeitspunkt der Glasschmelze und eine Viskosität von maximal 10³ Pascalsekunden (Pa·s) besitzt. Die befüllte Form wird automatisiert abtransportiert und eine leere Form zum Düsenkanal zugeführt. Unmittelbar nach Abschluss des Schritts des Förderns der Glasschmelze in die Form wird das in der Form enthaltene Glasformteil getempert. In Abhängigkeit von der Glasart wird das Glasformteil insbesondere entsprechend zeitlich auf die Transformationstemperatur (Tg) abgekühlt, um dann nach weiterer Abkühlung unter die Transformationstemperatur aus der Form entnommen zu werden.

Die Erfindung betrifft weiterhin eine Vorrichtung zur Herstellung von Glasformteilen durch Spritzgießen. Die Vorrichtung weist eine Vorrichtung zum Bereitstellen von Glasschmelze, einen Gießzylinder mit einem Anschluss für die Überführung von Glasschmelze in den Gießzylinder, einen mit dem Gießzylinder verbundenen Düsenkanal für die Abführung der Glasschmelze aus dem Gießzylinder, eine mit dem Düsenkanal verbindbare Form für die Ausformung eines Glasformteils aus Glasschmelze, eine Fördereinrichtung zum Fördern von Glasschmelze aus dem Gießzylinder durch den Düsenkanal in die Form mittels Druckbeaufschlagung und eine Heizeinrichtung zum Beheizen der Glasschmelze auf. Die Fördereinrichtung ist so ausgebildet und angeordnet, dass sie die Glasschmelze zur Förderung in die Form mit einem niedrigen Druck von maximal 10 bar beaufschlagt. Die Heizeinrichtung ist so ausgebildet und angeordnet, dass die Glasschmelze so beheizt wird, dass sie beim Verlassen des Düsenkanals mindestens die Temperatur am Arbeitspunkt der Glasschmelze und eine Viskosität von maximal 10³ Pa·s besitzt. Eine Transporteinrichtung ist zum automatisierten Abtransportieren der befüllten Form und zum automatisierten Zuführen einer leeren Form zur Vorrichtung vorgesehen. Ein Temperofen ist vorgesehen. Wie beispielsweise Winnacker Küchler "Chemische Technik", Band 8 zu entnehmen ist, wird der Arbeitspunkt eines Glases (auch als "Verarbeitungspunkt" oder englisch als "working point" bezeichnet) gemäß ISO 7884-1 als der Temperaturwert verstanden, bei dem das Glas eine Viskosität von 10⁴ dPa·s, d. h. 10³ Pa·s besitzt.

Unter einer niedrigen Viskosität ist ein zahlenmäßig niedriger Viskositätswert oder anders gesagt eine hohe Fluidität zu verstehen. Wenn die Viskosität der Glasschmelze also maximal 10³ Pa·s beträgt, heißt dies, dass der Betrag der Viskosität 1.000 oder kleiner ist. Es handelt sich also um eine für Glas gut fließfähige Masse.

Durch das neue Verfahren und die neue Vorrichtung zur Herstellung von Glasformteilen durch Spritzgießen werden aus einer niedrigviskosen Glasschmelze Glasformteile hergestellt, die eine erhöhte mechanische Festigkeit, Temperaturwechselbeständigkeit und Oberflächengüte aufweisen. Die Glasformteile sind daher ohne oder zumindest mit weniger Nachbearbeitung für ihre jeweilige Anwendung unmittelbar gebrauchstüchtig. Diese positiven Eigenschaften werden insbesondere durch die niedrige Druckbeaufschlagung und die niedrige Viskosität erreicht. Hierdurch wird im Vergleich zu der aus dem Stand der Technik bekannten hohen Druckbeaufschlagung bei geringeren Viskositäten ein verbessertes Gefüge des Glases mit geringeren Spannungen erzielt. Beim Ausformvorgang findet keine ungewollte Komprimierung einzelner Schichten, sondern eine gleichmäßige schonende Ausbreitung der fließfähigen Schmelze in der Form statt.

Diese Effekte können besonders gut erreicht werden, wenn ein so genanntes "langes" Glas zum Einsatz kommt, d. h. ein Glas mit einem großen Temperaturbereich, in welchem es eine hohe Fließfähigkeit besitzt, die eine gute Verarbeitung gewährleistet. Bei insbesondere praktisch zur Anwendung kommenden Gläsern - wie beispielsweise Bleisilikat, Borosilikat, Alkali-Erdalkali-Alumosilikat, Glaskeramik sowie Sondergläsern - liegt dieser Temperaturbereich in einer Größenordnung von etwa 900 °C bis 1300 °C.

Das Verfahren wird insbesondere so betrieben, dass die Glasschmelze beim Verlassen des Düsenkanals eine Temperatur besitzt, die höher, insbesondere zwischen 10 °C und 100 °C höher, als die Temperatur am Arbeitspunkt der Glasschmelze ist. Der Arbeitspunkt der Glasschmelze wird in Fachkreisen auch als der Viskositätswert der Glasschmelze verstanden, ab dem eine gute Verarbeitung der Glasschmelze möglich ist. Der Arbeitspunkt liegt dabei oberhalb der Transformationstemperatur (Tg), der Fließgrenze und des Erweichungspunkts des Glases. Es ist also nun erfindungsgemäß bevorzugt, die Glasschmelze so zu beheizen, dass sie beim Verlassen des Düsenkanals bzw. beim Eintritt in die Form eine sehr niedrige Viskosität von maximal 10³ Pa·s und insbesondere von 10² Pa·s oder weniger besitzt.

Die Glasschmelze kann mit einem Druck von maximal 5 bar, insbesondere von 1 bar oder weniger, beaufschlagt werden. Diese im Vergleich zum Stand der Technik sehr niedrige Druckbeaufschlagung ist möglich, da die Glasschmelze eine gute Fließfähigkeit besitzt. Durch diese niedrige Druckbeaufschlagung findet nur eine geringe Komprimierung einzelner Schichten des Glases und ein entsprechend geringerer Aufbau unerwünschter permanenter Spannungen im Glasformteil statt.

Die Glasschmelze kann mittels einer rotierend angetriebenen Förderschnecke in die Form gefördert werden. Ein erster wesentlicher Vorteil der Förderung mittels einer Förderschnecke im Gegensatz zu einem im Stand der Technik verwendeten Kolben besteht darin, dass die Förderschnecke einfach zur Förderung unterschiedlicher Fördermengen von Glasschmelze durch Steuerung ihres entsprechenden Verdrehwinkels eingestellt werden kann, so dass die Herstellung von Glasformteilen unterschiedlicher Geometrie ohne Umrüstung der Fördereinrichtung ermöglicht wird. Hierbei spielt es auch eine Rolle, dass das Gemenge oder das fertige Glas nicht in der Vorrichtung selbst bzw. dem Gießzylinder, sondern stattdessen in einer vorgeschalteten Schmelzwanne oder dergleichen in größerer Menge aufgeschmolzen wird. Es kann dem Gießzylinder daher eine bestimmte Menge an Glasschmelze zugeführt werden, die größer ist als die für ein jeweilig zu fertigendes Glasformteil benötigte Menge. Das in die Form zu fördernde Volumen der Glasschmelze wird dann durch die Regelung der Fördereinrichtung, d. h. insbesondere durch die Verdrehung der Förderschnecke, geregelt.

Alternativ zu der Förderschnecke kann die Glasschmelze auch mittels Gasdruck, insbesondere unter Verwendung eines Schutzgases, in die Form gefördert werden. In diesem Fall wird der Innenraum des Gießzylinders derart druckmäßig gegenüber der Atmosphäre abgeschlossen, dass eine Druckbeaufschlagung der in der Vorrichtung enthaltenen Glasschmelze so erfolgt, dass diese durch den Düsenkanal in die Form eintritt. Für die Druckbeaufschlagung kann insbesondere ein Schutzgas, z. B. Argon, verwendet werden, um eine ungewollte Oxidation der in der Vorrichtung verwendeten Werkstoffe zu vermeiden. Auch der gesamte äußere Bereich des Düsenkanals kann zu diesem Zweck von einer Schutzgasatmosphäre, insbesondere Argon, umgeben sein. Das Schutzgas wird vorzugsweise auch dann verwendet, wenn als Fördereinrichtung eine Förderschnecke genutzt wird, wie dies oberhalb beschrieben wurde.

Die Glasschmelze kann in dem mit dem Düsenkanal verbundenen Gießzylinder so beheizt werden, dass sie die Temperatur am Arbeitspunkt der Glasschmelze aufweist, und der Düsenkanal kann so beheizt werden, dass die Glasschmelze beim Verlassen des Düsenkanals eine Temperatur aufweist, die höher als die Temperatur am Arbeitspunkt der Glasschmelze ist. Beim Aufschmelzen des Glases oder Glasgemenges außerhalb der Vorrichtung, insbesondere in einer Schmelzwanne, wird die Glasschmelze auf eine sehr hohe Temperatur gebracht, die je nach Art der zu verarbeitenden Glasart z. B. in einer Größenordnung von 1.400 °C liegt. Die Glasschmelze kühlt sich dann beim Fördern in die Vorrichtung und den Gießzylinder ab. Der Gießzylinder wird nun so beheizt, dass die Glasschmelze nicht erstarrt und vorzugsweise eine Viskosität besitzt, die dem Arbeitspunkt der Glasschmelze entspricht. Um die Fließfähigkeit weiter zu erhöhen, wird der Düsenkanal zusätzlich beheizt, wobei dies vorzugsweise mittels einer Induktionsheizung realisiert wird und die Temperatur des Glases in diesem Bereich höher als die Temperatur am Arbeitspunkt der Glasschmelze ist. In dieser Weise wird sichergestellt, dass die gewünschte Fließfähigkeit der Glasschmelze beim Eintritt in die Form erreicht wird.

Um diese niedrige Viskosität auch beim Einfüllen der Glasschmelze weiter zu erhalten, wird die Form vorzugsweise so beheizt, dass sie eine Temperatur von mindestens 200 °C oberhalb der Transformationstemperatur des Glases aufweist. Hierdurch wird ein zu rasches Abkühlen der Glasschmelze verhindert und die gleichmäßige und spannungsfreie Befüllung der Form zur Ausbildung eines hochwertigen Glasformteils gewährleistet.

Um die spannungsfreie Ausbildung der Glasformteile sicherzustellen, wird die Glasschmelze vorzugsweise ohne einen Pressschritt hergestellt, der dem Fördern der Glasschmelze in die Form nachfolgt. Ein derartiger Pressschritt ist aus dem Stand der Technik bekannt und insbesondere in der deutschen Patentanmeldung DE 197 42 159 A1 als ganz wesentlicher Teil des Verfahrens beschrieben. Ein solcher Pressschritt entfällt nun vorzugsweise gänzlich bei der vorliegenden Erfindung.

Der Gießzylinder der Vorrichtung kann insbesondere aus hochwarmfesten Stahl und/oder Molybdän bzw. einer Titan-Molybdänlegierung bestehen und an seiner der Glasschmelze zugewandten inneren Oberfläche zur Vermeidung von Korrosion mit Platin beschichteten oder ausgekleidet sein, wobei die beiden Werkstoffe durch eine keramische Schicht voneinander getrennt sind. Auch die Welle der Förderschnecke, die Förderschnecke selbst und der Düsenkanal können aus derartigen Materialien ausgebildet sein. Es kann sich auch um eine korrosionsbeständige Nickelbasislegierung (beispielsweise Inconel) oder Molybdän bzw. eine Molybdän-Titanlegierung handeln. Die keramische Schicht ist vorzugsweise nur wenige µm dick und kann vornehmlich aus Korund bestehen.

Der Düsenkanal kann aus einem Keramikwerkstoff bestehen, der im Falle einer Dickschichtbelegung konisch in eine Umhüllung aus warmfestem Stahl oder Molybdän bzw. einer Molybdän-Titanlegierung eingepasst ist. Der Keramikwerkstoff kann aus Aluminiumtitanat, insbesondere Aluminiumtitanat in Mischung mit hexagonalem Bornitrid, bestehen. Der Keramikwerkstoff kann als mehrere Millimeter starker Zylinder oder aus µm-starken Schichten von Titannitrid und/oder Chromnitrid ausgebildet sein, die direkt auf dem Zylinderinneren des Hüllwerkstoffs aufgebracht sind. Die innere Oberfläche des Düsenkanals kann jedoch auch mit Platin belegt sein, welches vom Hüllwerkstoff mittels einer dünnen Keramikschicht getrennt ist.

Die gesamte Vorrichtung kann mittels einer Widerstandsheizung variotherm beheizt werden, d. h., dass im Bereich der Fördereinrichtung eine höhere Temperatur herrscht, als dies in dem Bereich der Vorrichtung der Fall ist, in dem die Glasschmelze dem Gießzylinder zugeführt wird. Der an den Gießzylinder anschließende Düsenkanal wird insbesondere so induktiv beheizt, dass eine noch höhere Temperatur der Glasschmelze als im Bereich der Fördereinrichtung herrscht, um die Glasschmelze so niedrigviskos wie möglich in die ebenfalls beheizte Form einzubringen.

Die Vorrichtung ist so aufgebaut, dass eine automatisierte Zuführung und Abführung von Formen zu der Vorrichtung ermöglicht ist. Hierfür wird nach dem vollständigen Befüllen der Form diese durch eine Transporteinrichtung, insbesondere ein Transportband, in Richtung eines Temperofens weitergefördert. Platten mit Gleitschichten, vornehmlich aus Bornitrid mit Aluminiumtitanat oder Chromnitrid im Bereich der Düsenkanalöffnung und der Formoberfläche ermöglichen es dabei, dass sowohl der Düsenkanal als auch die Eingussöffnung der Form verschlossen werden. Dieser Bereich wird kurz mit einem Schutzgas, insbesondere kaltem Argon, angeblasen, um die Glasschmelze so weit abzukühlen, dass ein Rückfluss der in der Form unter geringem Überdruck stehenden Glasschmelze vermieden wird. Die gefüllte Form wird dann durch eine Schleuse in einen genau regelbaren Temperofen transportiert, wobei die Temperatur dort vorzugsweise so geregelt wird, dass sie nur wenige Grad Celsius über Tg des jeweilig verwendeten Glases liegt. Die Form verbleibt dann in dem Temperofen, bis sich die Temperatur des Glasformteils an die des Temperofens angeglichen hat. Im nächsten Schritt erfolgt die Entnahme der Form aus dem Temperofen durch eine Schleuse. Nach der Abkühlung unterhalb von Tg des Glases erfolgt dann die Entnahme des Formteils, ohne dass eine ungewollte Deformation des Glasformteils erfolgt. Hierfür wird zunächst der Anguss vom eigentlichen Glasformteil getrennt, ohne dieses zu beschädigen. Das Glasformteil wird dann in einem Kühlofen auf Raumtemperatur abgekühlt und ist danach weitgehend spannungsfrei. Je nach Anforderung an das Glasformteil kann dieses bei Bedarf auch anschließend z. B. durch Sägen, Schleifen oder Polieren nachbearbeitet werden.

Unmittelbar nach der Trennung der gefüllten Form vom Düsenkanal wird eine neue vorgeheizte leere Form an diesen antransportiert, so dass eine weitere Füllung erfolgen kann. Während des Ansetzens der neuen Form erfolgt sehr schnell die geregelte, insbesondere induktive, Erwärmung der Glasschmelze im Bereich des Düsenkanals, so dass die zum Einguss erforderliche geringe Viskosität gewährleistet ist. Die Umlaufzeit sowie die Füllzeiten der Formen hängen von den Anforderungen an die Größe und Komplexität des jeweiligen Glasformteils ab. Durch den Einsatz der Gasdruckbeaufschlagung oder einer Förderschnecke zum Befüllen der Form sowie dem Einsatz der zuvor beschriebenen geeigneten Werkstoffe für die Vorrichtung ist es möglich, Formteile unterschiedlicher Größe und Komplexität hintereinander herzustellen oder gar mehrere Kavitäten in einer Form zu füllen.

Damit sich die Glasschmelze schnell in der Kavität der Form verteilen kann, wird deren Oberfläche zur besseren Gleitwirkung vorzugsweise mit Chromnitrid PVD-beschichtet. Es ist jedoch ebenfalls möglich, nur das hexagonale Bornitrid allein oder in variabler Kombination mit Aluminiumtitanat zur Anwendung zu bringen. Die Schichtstärken betragen dabei insbesondere maximal etwa 3 µm.

Neben transparenten farblosen Glasformteilen können z. B. auch farbige Glasformteile hergestellt werden, beispielsweise indem farbige Glasstangen im Zulauf der Vorrichtung der Glasschmelze hinzugegeben und in dieser Weise eingeschmolzen werden.

Die in den Patentansprüchen und der Beschreibung genannten Merkmale sind bezüglich ihrer Anzahl so zu verstehen, dass mindestens die dort genannte Anzahl vorhanden ist, ohne dass es einer expliziten Verwendung des Adverbs "mindestens" bedarf. Wenn also beispielsweise von einem Düsenkanal die Rede ist, ist dies so zu verstehen, dass mindestens ein Düsenkanal vorhanden ist. Wenn z. B. zwei Heizeinrichtungen genannt werden, ist dies so zu verstehen, dass mindestens zwei Heizeinrichtungen vorhanden sind. Wenn hingegen die genaue Anzahl eines Merkmals angegeben werden soll, findet das Adjektiv "genau" vor dem jeweiligen Merkmal Verwendung. Bei der Nennung einer solchen Mindestanzahl gilt auch die genaue Anzahl als unmittelbar offenbart.

### KURZBESCHREIBUNG DER FIGUREN

Im Folgenden wird die Erfindung anhand in den Figuren dargestellter bevorzugter Ausführungsbeispiele weiter erläutert und beschrieben.

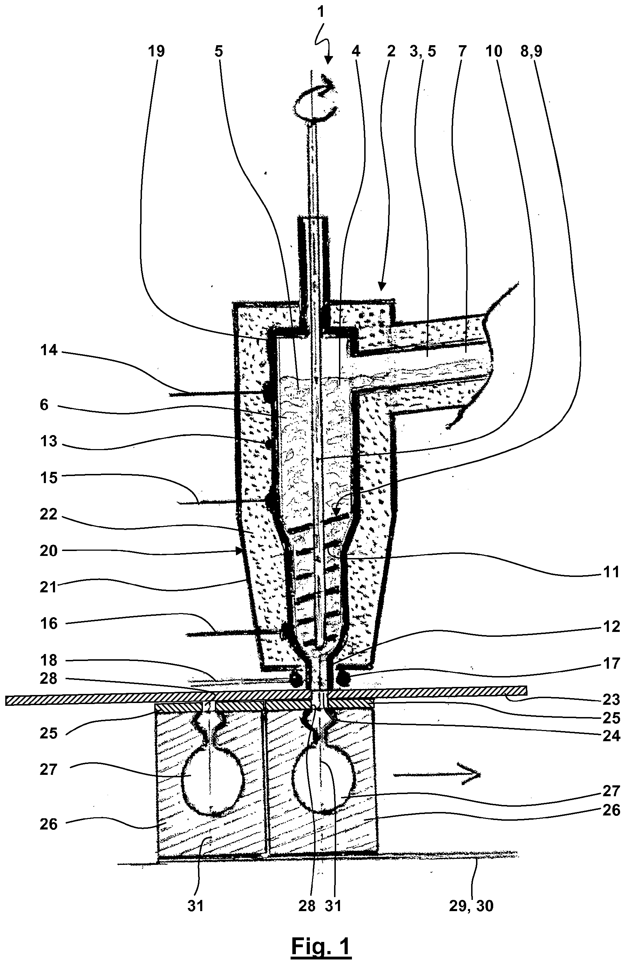

- **Fig. 1**: zeigt eine Prinzipskizze einer beispielhaften Ausführungsform der neuen Vorrichtung zur Herstellung von Glasformteilen durch Spritzgießen in einer Schnittansicht.

### FIGURENBESCHREIBUNG

**Fig. 1** zeigt eine erste beispielhafte Ausführungsform einer Vorrichtung 1 zur Herstellung von Glasformteilen durch Spritzgießen in einer vereinfachten Schnittansicht.

Die Vorrichtung 1 weist einen Gießzylinder 2 mit einem Anschluss 3 für die Überführung von Glasschmelze 4 in den Gießzylinder 2 auf. Der Anschluss 3 weist eine Zuführleitung 5 auf, die direkt oder indirekt mit einer nicht dargestellten Schmelzwanne oder einer anderen Vorrichtung zur Erzeugung und Bereitstellung einer größeren Menge der Glasschmelze 4 verbunden ist. Die Zuführleitung 5 ist dabei vorzugsweise so angeordnet, dass sie einen permanenten Zulauf von Glasschmelze 4 in den Gießzylinder 2 aus der Schmelzwanne bereitstellt, wobei das Niveau der Glasschmelze 4 in der Schmelzwanne und dem Gießzylinder 2 übereinstimmt. Die Glasschmelze 4 wird also nicht ursprünglich in dem Gießzylinder 2, sondern außerhalb des Gießzylinders 2 aufbereitet und kann dort für eine entsprechend schnelle automatisierte Serienherstellung von Glasformteilen in ausreichender Menge bereitgestellt werden. Der Aufbau der Schmelzwanne ist im Stand der Technik bekannt und wird daher im Folgenden nicht weiter beschrieben.

Die Glasschmelze 4 füllt also den Innenraum 6 des Gießzylinders 2 mehr oder weniger vollständig, wobei das verbleibende Volumen des Innenraums 6 vorzugsweise mit einem Schutzgas 7, insbesondere Argon, befüllt ist. Hierfür ist der Innenraum 6 gegenüber der Atmosphäre in geeigneter Weise abgedichtet.

Weiterhin ist im Innenraum 6 des Gießzylinders 2 eine Fördereinrichtung 8 angeordnet, die im vorliegenden bevorzugten Ausführungsbeispiel als Förderschnecke 9 mit einer Welle 10 und einer Förderwendel 11 ausgebildet ist. Die Welle 10 der Fördereinrichtung 8 ist dabei nach oben abgedichtet aus dem Gießzylinder 2 herausgeführt und mit einem Antrieb (nicht dargestellt) verbunden, durch den die Verdrehung der Förderschnecke 9 geregelt wird.

Am entgegengesetzten unteren Ende des Gießzylinders 2 ist ein Düsenkanal 12 angeordnet. Der Düsenkanal 12 ist mit dem Innenraum 6 des Gießzylinders 2 für die Abführung der Glasschmelze 4 aus dem Gießzylinder 2 verbunden. Weitere Details werden unterhalb beschrieben.

Die Vorrichtung 1 weist eine erste Heizeinrichtung 13 im Bereich des Gießzylinders 2 auf. Die Heizeinrichtung 13 ist hier als Widerstandsheizung ausgebildet und weist Anschlüsse 14, 15 und 16 auf. Die erste Heizeinrichtung 13 dient zum Beheizen der Glasschmelze 4 in dem Gießzylinder 2, so dass die Temperatur der Glasschmelze 4 am Arbeitspunkt der Glasschmelze 4 liegt. Der Düsenkanal 12 weist eine zweite Heizeinrichtung 17 auf, die hier induktiv ausgebildet ist und einen Anschluss 18 (Induktionsspule) aufweist. Der Gießzylinder 2 weist eine Zylinderwand 19 auf, die vorzugsweise aus hochwarmfestem Stahl und/oder Molybdän bzw. einer Titan-Molybdänlegierung besteht. An seiner der Glasschmelze 4 zugewandten inneren Oberfläche ist der Gießzylinder 2 mit einer keramischen Schicht, vorzugsweise aus Korund, sowie mit Platin beschichtet bzw. damit ausgekleidet.

Nach außen anschließend ist eine Isolierung 20 vorgesehen. Die Isolierung 20 weist eine weitere Zylinderwand 21, wiederum insbesondere aus hochwarmfestem Stahl oder Molybdän bzw. einer Titan-Molybdänlegierung, und ein Isoliermaterial 22 auf, welches zwischen den beiden Zylinderwänden 19, 21 aufgenommen ist. Bei dem Isoliermaterial 22 handelt es sich insbesondere um eine ausreichend dicke Schicht aus Quarzglaspulver "fused silica" mit einem bimodalen Kornband, insbesondere mit einer maximalen Korngröße von 100 µm. Das Quarzglaspulver ist in den Zwischenraum zwischen den beiden Zylinderwänden 19, 21 eingestampft oder gegossen, so dass die äußere, relativ kalte Zylinderwand 21 die Druckfestigkeit des Gießzylinders 2 und somit der Vorrichtung 1 gewährleistet. Das Quarzglaspulver wirkt druckausgleichend und durch die mit der bimodalen Kornverteilung erzeugte Hohlraumstruktur wärmeisolierend.

Der Düsenkanal 12 kann zumindest teilweise aus einem Keramikwerkstoff bestehen, insbesondere einem Aluminiumtitanat aufweisenden Keramikwerkstoff. Es kann sich auch z. B. um eine Mischung von Aluminiumtitanat mit hexagonalem Bornitrid handeln. Der verwendete Keramikwerkstoff kann dabei insbesondere konisch in ein aus Metall bestehendes Rohr, z. B. aus Inconel oder Molybdän, eingepasst werden. Die metallische Umhüllung kann mit Titaniumnitrid und/oder Chromnitrid beschichtet bzw. damit ausgekleidet sein. Des Weiteren kann der Düsenkanal 12 an seiner der Glasschmelze 4 zugewandten inneren Oberfläche mit Platin beschichtet bzw. damit ausgekleidet sein. Der Düsenkanal 12 weist insbesondere einen Innendurchmesser von maximal etwa 30 mm auf und wird mittels der zweiten Heizeinrichtung 17 auf eine höhere Temperatur als die im Gießzylinder 2 befindliche Glasschmelze 4 erhitzt, um kurzfristig im Angussbereich eine sehr niedrigviskose Glasschmelze 4 zu erreichen. Hierdurch wird auch ein Leerfahren des Düsenkanals 12 für den unterhalb weiter beschriebenen Austausch der Formen ermöglicht. Es ist bevorzugt, dass der gesamte äußere Bereich des Düsenkanals 12 durch Einhausung von einer Schutzgasatmosphäre, vorzugsweise Argon, umgeben ist, um eine Oxidation der verwendeten Werkstoffe zu vermeiden. Der Düsenkanal 12 ist so ausgebildet und angeordnet, dass er leicht austauschbar ist, sofern sein Verschleiß einen solchen Austausch notwendig macht.

An den Düsenkanal 12 schließt sich nach unten gesehen eine Platte 23 mit einer Öffnung 24 an, die dem Düsenkanal 12 zugeordnet ist. Unmittelbar unterhalb anschließend ist eine Platte 25 einer Form 26 mit einer Kavität 27 angeordnet, die zur Herstellung eines Glasformteils mit Glasschmelze 4 befüllt wird. Hierfür weist die Platte 25 eine Öffnung 28 auf. Die Platten 23, 25 bestehen insbesondere aus einem keramischen Material, zum Beispiel Zirkonoxid, Aluminiumtitanat oder vorzugsweise Bornitrid. Diese Materialen besitzen die Eigenschaft, dass sie durch die Glasschmelze 4 nicht benetzt werden und ein gutes Gleiten bei einer Relativbewegung zwischen den Platten 23, 25 gewährleisten. Dabei wird die Dichtigkeit des Düsenkanals 12 in dem Sinne sichergestellt, dass die Glasschmelze 4 an einem ungewollten Nachlaufen gehindert wird. Förderlich ist dabei auch eine Rücknahme des Fließdrucks der Glasschmelze 4 durch geringe Rückdrehung der Förderschnecke 9 oder im Falle der Gasdruckbeaufschlagung durch schnelle Druckwegnahme nach Erstarrung des Glases im Formeneinlauf infolge der Kühlung mittels Argon.

Die beispielhaft dargestellten Formen 26 werden mittels einer Transporteinrichtung 29, insbesondere einem Transportband 30, getaktet nacheinander relativ zu dem Gießzylinder 2 gefördert und so positioniert, dass sich die Öffnungen 24, 28 überdecken. In dieser Stellung findet dann der eigentliche Gießvorgang statt, bei dem die Glasschmelze 4 mit einer Viskosität von maximal 10³ Pa·s, vorzugsweise 10² Pa·s oder weniger, durch den Düsenkanal 12 und die Öffnungen 24, 28 in die Kavität 27 der Form 26 mit einem Druck von maximal 10 bar eingebracht werden. Die Glasschmelze 4 breitet sich dabei entlang der Wandung der Kavität 27 aus, bis eine vollständige Formfüllung erfolgt ist. Die Form 26 wird dabei mittels einer nicht dargestellten dritten Heizeinrichtung weiterbeheizt, wobei die Form 26 dabei vorzugsweise eine Temperatur von mindestens 200 °C oberhalb Tg des Glases aufweist. Die Innenseite der Form 26, d. h. die Kavität 27, kann mit einer keramischen Schicht - insbesondere Chromnitrid - versehen sein, um eine gute Gleitwirkung für die Glasschmelze 4 bereitzustellen. Insbesondere handelt es sich um eine Schicht mit einer geringen Schichtstärke von wenigen µm.

Die Form 26 kann beim Füllvorgang mit einer geringen Schließkraft geschlossen gehalten werden. Erst wenn die Form 26 vollständig befüllt ist und die Eingussschonung durch Anblasen der Form 26 im Angussbereich mit Schutzgas, z. B. kaltem Argon, erstarrt ist, wird die Schließkraft etwas erhöht. Der Angussbereich kann beim Befüllen der Form 26 mit der niedrigviskosen Glasschmelze 4 weit geöffnet sein und nach erfolgter Befüllung durch eine in diesem Bereich eingebaute, verschiebbare Platte aus nicht benetzbarer Keramik bis auf wenige Millimeter geschlossen werden.

Zur dosiergenauen Befüllung der Kavität 27 mit Glasschmelze 4 über den Düsenkanal 12 wird die Förderschnecke 9 mittels eines Motors, insbesondere eines Schrittmotors, kurzzeitig angetrieben, um die gewünschte Menge an Glassschmelze 4 durch den Düsenkanal 12 in die Kavität 27 der Form 26 einzubringen. Die Förderschnecke 9 kann dabei insbesondere mit einem Längen-/Durchmesserverhältnis von zwischen 15:1 bis 18:1 ausgebildet sein. Nach der erfolgten Befüllung der Form 26 kann die Welle 10 mit der Förderwendel 11 auf den Eingang des Düsenkanals 12 abgesenkt werden, so dass der ungewollte Auslauf weiterer Glasschmelze 4 verhindert wird. Dies gilt insbesondere für den Fall des Austauschs des Düsenkanals 12. Dieser Effekt kann ebenso durch eine geringe Rückdrehung der Förderschnecke 9 erreicht werden, wobei dann nicht induktiv geheizt wird. Nach Abschluss der Befüllung wird die befüllte Form 26 abgefördert und eine unbefüllte weitere Form 26 zugeführt. Anschließend beginnt der oberhalb beschriebene Füllvorgang von vorne.

Die befüllte Form 26 wird keinem Nachpressvorgang unterzogen, sondern direkt über eine Schleuse oder dergleichen in einen vorzugsweise wenige Grad Celsius über Tg des Glases eingestellten Temperofen (nicht dargestellt) transportiert. In dem Temperofen verweilt die befüllte Form 26 solange, bis ein Temperaturausgleich stattgefunden hat. Hierdurch wird ein spannungsfreies Glas erhalten, was insbesondere bei komplexen und unterschiedlich dicken Glasformteilen notwendig ist, um die gewünschte Gebrauchstüchtigkeit zu erhalten. Nach der Temperung in dem Temperofen und der Ausschleusung der Form 26 erfolgt eine schnelle glasspezifische Abkühlung auf wenige Grad Celsius unterhalb Tg, so dass das erzeugte Glasformteil deformationsfrei vom Angussstück befreit und aus der Form 26 entnommen werden kann. Hierfür wird die bewegliche Formhälfte relativ zu der festen Formhälfte bewegt, d. h. die in der Teilungsebene 31 geteilt ausgebildete Form 26 geöffnet. Anschließend wird das Glasformteil einer angemessen schnellen Abkühlung, z. B. in einem nachfolgend angeordneten Kühlofen (nicht dargestellt) zugeführt.

Nach der Entnahme des Glasformteils aus der Form 26 weist die Form zum Beispiel noch eine Temperatur von 500 °C auf und wird anschließend insbesondere induktiv schnell wieder auf ca. 700 °C erhitzt, so dass sie schnell für eine erneute Befüllung zur Verfügung steht.

Alternativ zu einer Ausbildung der Fördereinrichtung 8 als Förderschnecke 9 kann der Spritzgießvorgang auch durch eine Gasdruckbeaufschlagung erfolgen. In diesem Fall ist also keine Förderschnecke 9 vorgesehen, sondern die Vorrichtung 1 weist im oberen Bereich einen abnehmbaren Deckel auf, durch den der Innenraum 6 des Gießzylinders 2 mit Glasschmelze befüllt wird. Der abnehmbare Deckel stellt einen druckdichten Abschluss des Innenraums 6 gegenüber der Atmosphäre bereit, so dass durch ein Schutzgas, insbesondere Argon oder andere inerte Gase, der Innenraum 6 und somit die Glasschmelze 4 kurzzeitig unter Überdruck gesetzt werden können. Hierdurch erfolgt eine entsprechende Ausleitung bzw. Förderung der Glasschmelze 4 durch den Düsenkanal 12 und eine entsprechende Befüllung der Form 26, wie dies oberhalb beschrieben wurde.

Mit dem neuen Verfahren und der Vorrichtung 1 ist es demnach möglich, in automatisierter Weise Glasformkörper mit einer vergleichsweise komplexen Geometrie und guten Materialeigenschaften zu kostengünstigen Konditionen herzustellen.

### BEZUGSZEICHENLISTE

- 1: Vorrichtung
- 2: Gießzylinder
- 3: Anschluss
- 4: Glasschmelze
- 5: Zuführleitung
- 6: Innenraum
- 7: Schutzgas
- 8: Fördereinrichtung
- 9: Förderschnecke
- 10: Welle
- 11: Förderwendel
- 12: Düsenkanal
- 13: Erste Heizeinrichtung
- 14: Anschluss
- 15: Anschluss
- 16: Anschluss
- 17: Zweite Heizeinrichtung
- 18: Anschluss
- 19: Zylinderwand
- 20: Isolierung
- 21: Zylinderwand
- 22: Isoliermaterial
- 23: Abdeckplatte
- 24: Öffnung
- 25: Abschlussplatte
- 26: Form
- 27: Kavität
- 28: Öffnung
- 29: Transporteinrichtung
- 30: Transportband
- 31: Teilungsebene

## Patentansprüche

1. Verfahren zur Herstellung von Glasformteilen durch Spritzgießen, mit den Schritten Bereitstellen einer Glasschmelze (4) außerhalb eines Gießzylinders (2),
Überführen der Glasschmelze (4) in den Gießzylinder (2),
Beheizen der Glasschmelze (4) in dem Gießzylinder (2),
Fördern der Glasschmelze (4) mittels Druckbeaufschlagung über einen Düsenkanal (12) in eine Form (26), wobei
die Glasschmelze (4) zur Förderung in die Form (26) mit einem niedrigen Druck von maximal 10 bar beaufschlagt wird, und
die Glasschmelze (4) so beheizt wird, dass sie beim Verlassen des Düsenkanals (12) mindestens die Temperatur am Arbeitspunkt der Glasschmelze (4) und somit eine Viskosität von maximal 10³ Pa·s besitzt,
automatisiertes Abtransportieren der befüllten Form (26),
Tempern des in der Form (26) enthaltenen Glasformteils unmittelbar nach Abschluss des Schritts des Förderns der Glasschmelze (4) in die Form (26) zur Erreichung eines weitgehend spannungsfreien Glasformteils, und
automatisiertes Zuführen einer leeren Form (26) zum Düsenkanal (12).

2. Verfahren nach Anspruch 1, **dadurch gekennzeichnet, dass** die Glasschmelze (4) beim Verlassen des Düsenkanals (12) eine Temperatur besitzt, die höher, insbesondere zwischen 10 °C und 100 °C höher, als die Temperatur am Arbeitspunkt der Glasschmelze (4) ist.

3. Verfahren nach mindestens einem der vorhergehenden Ansprüche, **dadurch gekennzeichnet, dass** die Glasschmelze (4) mit einem Druck von maximal 5 bar, insbesondere von 1 bar oder weniger, beaufschlagt wird.

4. Verfahren nach mindestens einem der vorhergehenden Ansprüche, **dadurch gekennzeichnet, dass** die Glasschmelze (4) mittels einer rotierend angetriebenen Förderschnecke (9) in die Form (26) gefördert wird.

5. Verfahren nach mindestens einem der Ansprüche 1 bis 3, **dadurch gekennzeichnet, dass** die Glasschmelze (4) mittels Gasdruck, insbesondere unter Verwendung eines Schutzgases, in die Form (26) gefördert wird.

6. Verfahren nach mindestens einem der vorhergehenden Ansprüche, **dadurch gekennzeichnet, dass**
die Glasschmelze (4) in einem mit dem Düsenkanal (12) verbundenen Gießzylinder (2) so beheizt wird, dass sie die Temperatur am Arbeitspunkt der Glasschmelze (4) aufweist, und
der Düsenkanal (12) so beheizt wird, dass die Glasschmelze (4) beim Verlassen des Düsenkanals (12) eine Temperatur aufweist, die höher als die Temperatur am Arbeitspunkt der Glasschmelze (4) ist.

7. Verfahren nach mindestens einem der vorhergehenden Ansprüche, **dadurch gekennzeichnet, dass** die Form (26) so beheizt wird, dass sie eine Temperatur von mindestens 200 °C oberhalb der Transformationstemperatur des Glases aufweist.

8. Verfahren nach mindestens einem der vorhergehenden Ansprüche, **dadurch gekennzeichnet, dass** die Glasformteile ohne einen dem Fördern der Glasschmelze (4) in die Form (26) nachfolgenden Pressschritt hergestellt werden.

9. Verfahren nach mindestens einem der vorhergehenden Ansprüche, **dadurch gekennzeichnet, dass** die Glasformteile bei einer Temperatur getempert werden, die wenige Grad Celsius oberhalb der Transformationstemperatur des Glases liegt.

10. Vorrichtung (1) zur Herstellung von Glasformteilen durch Spritzgießen zum Betreiben des Verfahrens nach mindestens einem der Ansprüche 1 bis 9, mit
einer Vorrichtung zum Bereitstellen von Glasschmelze, insbesondere einer Schmelzwanne, einem Schmelztiegel oder einem Glashafen,
einem Gießzylinder (2) mit einem Anschluss (3) für die Überführung von Glasschmelze (4) in den Gießzylinder (2),
einem mit dem Gießzylinder (2) verbundenen Düsenkanal (12) für die Abführung der Glasschmelze (4) aus dem Gießzylinder (2),
einer mit dem Düsenkanal (12) verbindbaren Form (26) für die Ausformung eines Glasformteils aus Glasschmelze (4),
einer Fördereinrichtung (8) zum Fördern von Glasschmelze (4) aus dem Gießzylinder (2) durch den Düsenkanal (12) in die Form (26) mittels Druckbeaufschlagung,
einer Heizeinrichtung (13, 17) zum Beheizen der Glasschmelze (4), **dadurch gekennzeichnet, dass**
die Fördereinrichtung (8) so ausgebildet und angeordnet ist, dass sie die Glasschmelze (4) zur Förderung in die Form (26) mit einem niedrigen Druck von maximal 10 bar beaufschlagt,
die Heizeinrichtung (13, 17) so ausgebildet und angeordnet ist, dass die Glasschmelze (4) so beheizt wird, dass sie beim Verlassen des Düsenkanals (12) mindestens die Temperatur am Arbeitspunkt der Glasschmelze (4) und somit eine Viskosität von maximal 10³ Pa·s besitzt, und
eine Transporteinrichtung (29) zum automatisierten Abtransportieren der befüllten Form (26) und zum automatisierten Zuführen einer leeren Form (26) zur Vorrichtung (1) vorgesehen ist, und
ein Temperofen vorgesehen ist.

11. Vorrichtung (1) nach Anspruch 10, **dadurch gekennzeichnet, dass** die Fördereinrichtung (8) als rotierend angetriebenen Förderschnecke (9) ausgebildet ist.

12. Vorrichtung (1) nach Anspruch 10, **dadurch gekennzeichnet, dass** die Fördereinrichtung (8) so ausgebildet und angeordnet ist, dass sie die Glasschmelze (4) mittels Gasdruck, insbesondere unter Verwendung eines Schutzgases, in die Form (26) fördert.

13. Vorrichtung (1) nach mindestens einem der vorhergehenden Ansprüche, **gekennzeichnet durch**
eine erste Heizeinrichtung (13), die zum Beheizen der Glasschmelze (4) in dem Gießzylinder (2) ausgebildet und angeordnet ist,
eine zweite Heizeinrichtung (17), die zum Beheizen der Glasschmelze (4) in dem Düsenkanal (12) ausgebildet und angeordnet ist.

14. Vorrichtung (1) nach mindestens einem der vorhergehenden Ansprüche, **dadurch gekennzeichnet, dass** der Gießzylinder (2) aus hochwarmfesten Stahl und/oder einer Titan-Molybdänlegierung besteht und an seiner der Glassschmelze (4) zugewandten inneren Oberfläche eine mit Platin versehene keramische Schicht aufweist.

15. Vorrichtung (1) nach mindestens einem der vorhergehenden Ansprüche, **dadurch gekennzeichnet, dass** der Düsenkanal (12) zumindest teilweise aus einem Keramikwerkstoff besteht, insbesondere einem Aluminiumtitanat aufweisenden Keramikwerkstoff.

## Claims

1. A method of producing moulded parts of glass by injection moulding, comprising the steps:
providing molten glass (4) outside of a casting cylinder (2),
transferring the molten glass (4) into the casting cylinder (2),
heating the molten glass (4) in the casting cylinder (2),
conveying the molten glass (4) into a mould (26) by pressurisation via a nozzle channel (12), wherein
the molten glass (4) to be conveyed into the mould (26) is subjected to a low pressure of a maximum of 10 bar, and
the molten glass (4) is heated such that it, when exiting the nozzle channel (12), has at least the temperature at the operating point of the molten glass (4) and thus a viscosity of a maximum of 10³ Pa·s,
automatic removal of the filled mould (26),
tempering the moulded part of glass in the mould (26) directly after completion of the step of conveying the molten glass (4) into the mould (26) for attaining a substantially tension-free moulded part of glass,
automatic feeding of an empty mould (26) to the nozzle channel (12).

2. The method of claim 1, **characterised in that** the molten glass (4), when exiting the nozzle channel (12), has a temperature which is higher, especially between 10 °C and 100 °C higher, than the temperature at the operating point of the molten glass (4).

3. The method of at least one of the preceding claims, **characterised in that** the molten glass (4) is subjected to a pressure of a maximum of 5 bar, especially of 1 bar or less.

4. The method of at least one of the preceding claims, **characterised in that** the molten glass (4) is conveyed into the mould (26) by a rotatingly driven screw conveyor (9).

5. The method of at least one of claims 1 to 3, **characterised in that** the molten glass (4) is conveyed into the mould (26) by gas pressure, especially using a protective gas.

6. The method of at least one of the preceding claims, **characterised in that**
the molten glass (4) is heated in a casting cylinder (2) being connected to the nozzle channel (12) such that it has the temperature at the operating point of the molten glass (4), and
the nozzle channel (12) is heated such that the molten glass (4), when exiting the nozzle channel (12), has a temperature which is higher than the temperature at the operating point of the molten glass (4).

7. The method of at least one of the preceding claims, **characterised in that** the mould (26) is heated such that it has a temperature of at least 200 °C above the transformation temperature of the glass.

8. The method of at least one of the preceding claims, **characterised in that** the moulded parts of glass are produced without a pressing step after conveying the molten glass (4) into the mould (26).

9. The method of at least one of the preceding claims, **characterised in that** the moulded parts of glass are tempered at a temperature being a few degrees Celsius above the transformation temperature of the glass.

10. An apparatus (1) for producing moulded parts of glass by injection moulding for conducting the method of at least one of claims 1 to 9, comprising:
an apparatus for providing molten glass, especially a melting tank, a melting pot or a glass pot,
a casting cylinder (2) including a connection (3) for transferring molten glass (4) into the casting cylinder (2),
a nozzle channel (12) being connected to the casting cylinder (2) for discharging the molten glass (4) from the casting cylinder (2),
a mould (26) being connectable to the nozzle channel (12) for moulding a moulded part of glass from molten glass (4),
a conveying unit (8) for conveying molten glass (4) from the casting cylinder (2) through the nozzle channel (12) into the mould (26) by pressurisation,
a heating unit (13, 17) for heating the molten glass (4), **characterised in that**
the conveying unit (8) is designed and arranged such that it subjects the molten glass (4) to be conveyed into the mould (26) to a low pressure of a maximum of 10 bar,
the heating unit (13, 17) is designed and arranged such that the molten glass (4) is heated such that it, when exiting the nozzle channel (12), has at least the temperature at the operating point of the molten glass (4) and thus a viscosity of a maximum of 10³ Pa·s, and
a transporting unit (29) for automatically removing the filled mould (26) and for automatically feeding an empty mould (26) to the apparatus (1) is provided, and
an tempering furnace is provided.

11. The apparatus (1) of claim 10, **characterised in that** the conveying unit (8) is designed as a rotatingly driven screw conveyor (9).

12. The apparatus (1) of claim 10, **characterised in that** the conveying unit (8) is designed and arranged such that it conveys the molten glass (4) into the mould (26) by gas pressure, especially using a protective gas.

13. The apparatus (1) of at least one of the preceding claims, **characterised by**
a first heating unit (13) being designed and arranged to heat the molten glass (4) in the casting cylinder (2),
a second heating unit (17) being designed and arranged to heat the molten glass (4) in the nozzle channel (4).

14. The apparatus (1) of at least one of the preceding claims, **characterised in that** the casting cylinder (2) is made of a high temperature steel and/or a titanium molybdenum alloy, and at its inner surface facing towards the molten glass (4) includes a ceramic layer including platinum.

15. The apparatus (1) of at least one of the preceding claims, **characterised in that** the nozzle channel (12) is at least partly made of a ceramic material, especially a ceramic material including aluminium titanate.

## Revendications

1. Procédé de fabrication de pièces moulées en verre par moulage par injection, avec les étapes suivantes:
réalisation de verre fondu (4) à l'extérieur d'un cylindre de coulée (2),
transfert du verre fondu (4) vers le cylindre de coulée (2),
chauffage du verre fondu (4) dans le cylindre de coulée (2),
convoyage du verre fondu (4) au moyen d'une alimentation en pression par l'intermédiaire d'un canal de buse (12) vers un moule (26),
le verre fondu (4) étant soumis, pour le convoyage vers le moule (26), à une pression basse de 10 bar maximum et
le verre fondu (4) étant chauffé de façon à ce que, lorsqu'il quitte le canal de buse (12), il présente au moins la température au point de fonctionnement du verre fondu (4) et donc une viscosité de 10³ Pa·s maximum,
transport automatisé du moule (26) rempli,
recuit de la pièce moulée en verre contenu dans le moule (26) immédiatement après la fin de l'étape de convoyage du verre fondu (4) vers le moule (26) afin d'obtenir une pièce moulée en verre largement exempte de contraintes et
introduction automatique d'un moule vide (26) dans le canal de buse (12).

2. Procédé selon la revendication 1, **caractérisé en ce que** le verre fondu (4) présente, lorsqu'il quitte le canal de buse (12), une température qui est supérieure, plus particulièrement supérieure de 10 °C à 100 °C à la température au point de fonctionnement du verre fondu (4).

3. Procédé selon au moins l'une des revendications précédentes, **caractérisé en ce que** le verre fondu (4) est soumis à une pression de 5 bar maximum, plus particulièrement de 1 bar ou moins.

4. Procédé selon au moins l'une des revendications précédentes, **caractérisé en ce que** le verre fondu (4) est convoyé au moyen d'une vis de convoyage entraînée en rotation (9) vers le moule (26).

5. Procédé selon au moins l'une des revendications 1 à 3, **caractérisé en ce que** le verre fondu (4) est convoyé au moyen d'une pression de gaz, plus particulièrement à l'aide d'un gaz de protection, vers le moule (26).

6. Procédé selon au moins l'une des revendications précédentes, **caractérisé en ce que** le verre fondu (4) est chauffé dans un cylindre de coulée (2) relié avec le canal de buse (12) de façon à ce qu'il présente la température au point de fonctionnement du verre fondu (4), et
le canal de buse (12) est chauffé de façon à ce que le verre fondu (4) présente, lorsqu'il quitte le canal de buse (12), une température qui est supérieure à la température au point de fonctionnement du verre fondu (4).

7. Procédé selon au moins l'une des revendications précédentes, **caractérisé en ce que** le moule (26) est chauffé de façon à ce qu'il présente une température d'au moins 200 °C au-dessus de la température de transformation du verre.

8. Procédé selon au moins l'une des revendications précédentes, **caractérisé en ce que** les pièces moulées en verre sont fabriquées sans une étape de pressage suivant le convoyage du verre fondu (4) vers le moule (26).

9. Procédé selon au moins l'une des revendications précédentes, **caractérisé en c**e que les pièces moulées en verre sont recuites à une température qui se trouve à quelques degrés Celsius au-dessus de la température de transformation du verre.

10. Dispositif (1) pour la fabrication de pièces moulées en verre par moulage par injection pour l'exécution du procédé selon au moins l'une des revendications 1 à 9, avec
un dispositif pour la réalisation de verre fondu, plus particulièrement un bac de fonte, un creuset de fonte ou un creuset à verre,
un cylindre de coulée (2) avec un raccord (3) pour le transfert du verre fondu (4) vers le cylindre de coulée (2),
un canal de buse (12) relié avec le cylindre de coulée (2) pour l'évacuation du verre fondu (4) hors du cylindre de coulée (2),
un moule (26), pouvant être relié avec le canal de buse (12), pour le formage d'une pièce moulée en verre à partir du verre fondu (4),
un dispositif de convoyage (8) pour le convoyage du verre fondu (4) du cylindre de coulée (2) à travers le canal de buse (12) vers le moule (26) au moyen d'une pressurisation,
un dispositif de chauffage (13, 17) pour le chauffage du verre fondu (4), **caractérisé en ce que**
le dispositif de convoyage (8) est conçu et disposé de façon à soumettre le verre fondu (4), pour le convoyage vers le moule (26), à une pression basse de 10 bar maximum,
le dispositif de chauffage (13, 17) est conçu et disposé de façon à ce que le verre fondu (4) soit chauffé de façon à ce que, lorsqu'il quitte le canal de buse (12), il présente au moins la température au point de fonctionnement du verre fondu (4) et donc une viscosité de 10³ Pa·s maximum et
un dispositif de transport (29) est prévu pour l'évacuation du moule (26) rempli et pour l'introduction automatisée d'un moule (26) vide dans le dispositif (1) et
un four de recuit est prévu.

11. Dispositif (1) selon la revendication 10, **caractérisé en ce que** le dispositif de convoyage (8) est conçu comme une vis de convoyage (9) entraînée en rotation.

12. Dispositif (1) selon la revendication 10, **caractérisé en ce que** le dispositif de convoyage (8) est conçu et disposé de façon à convoyer le verre fondu (4) au moyen d'une pression de gaz, plus particulièrement à l'aide d'un gaz de protection, vers le moule (26).

13. Dispositif (1) selon au moins l'une des revendications précédentes, **caractérisé par**
un premier dispositif de chauffage (13) qui est conçu et disposé pour le chauffage du verre fondu (4) dans le cylindre de coulée (2),
un deuxième dispositif de chauffage (17) qui est conçu et disposé pour le chauffage du verre fondu (4) dans le canal de buse (12).

14. Dispositif (1) selon au moins l'une des revendications précédentes, **caractérisé en ce que** le cylindre de coulée (2) est constituée d'un acier résistant aux hautes températures et/ou d'un alliage titane-molybdène et présente, au niveau de sa surface interne orientée vers le verre fondu (4), une couche céramique revêtue de platine.

15. Dispositif (1) selon au moins l'une des revendications précédentes, **caractérisé en ce que** le canal de buse (12) est constitué au moins partiellement d'un matériau de type céramique, plus particulièrement d'un matériau de type céramique comprenant du titanate d'aluminium.
